(19) Europäisches Patentamt
European Patent Office
Office européen des brevets

(11) **EP 1 343 259 B1**

(12) **FASCICULE DE BREVET EUROPEEN**

(45) Date de publication et mention
de la délivrance du brevet:
**21.06.2006 Bulletin 2006/25**

(51) Int Cl.:
***H04B 7/204*** *(2006.01)*

(21) Numéro de dépôt: **03290427.8**

(22) Date de dépôt: **21.02.2003**

(54) **Dispositif gestionnaire de ressources pour un système de télécommunication par satellite**

Mittelverwaltungsvorrichtung für ein Satelliten-Telekommunikationssystem

Resource administrator device for a satellite telecommunication system

(84) Etats contractants désignés:
**AT BE BG CH CY CZ DE DK EE ES FI FR GB GR HU IE IT LI LU MC NL PT SE SI SK TR**

(30) Priorité: **04.03.2002 FR 0202701**

(43) Date de publication de la demande:
**10.09.2003 Bulletin 2003/37**

(73) Titulaire: **ALCATEL**
**75008 Paris (FR)**

(72) Inventeurs:
• **Combes, Stéphane**
**31400 Toulouse (FR)**
• **Zein Al-Abedeen, Tarif**
**31320 Castanet (FR)**
• **Gayrard, Jean-Didier**
**31100 Toulouse (FR)**

(74) Mandataire: **Hedarchet, Stéphane et al**
**COMPAGNIE FINANCIERE ALCATEL**
**Département Propriété Industrielle**
**54, rue La Boétie**
**75008 Paris (FR)**

(56) Documents cités:
**EP-A- 1 104 124        EP-A- 1 158 701**
**GB-A- 2 324 435**

**Description**

La présente invention concerne un dispositif gestionnaire de ressources pour un système de télécommunication par satellite multi-spots ou multi-faisceaux, le système comportant une pluralité de terminaux utilisateurs émettant des données à destination d'une pluralité de spots, chaque spot représentant l'intersection d'un faisceau satellitaire avec la surface de la terre, le faisceau représentant le diagramme de rayonnement d'une antenne du satellite. Ce type de satellite permet l'utilisation de plusieurs faisceaux d'antennes à bord du satellite pour couvrir des zones géographiques contiguës, au lieu d'un seul faisceau large. La présente invention est plus particulièrement adaptée aux systèmes utilisant un satellite ou plusieurs satellites ayant jusqu'à plusieurs dizaines de spots (d'une dizaine à une centaine). De tels systèmes ont une capacité accrue grâce au meilleur bilan de liaison assuré par des faisceaux étroits et la possibilité de réutiliser la fréquence entre les faisceaux.

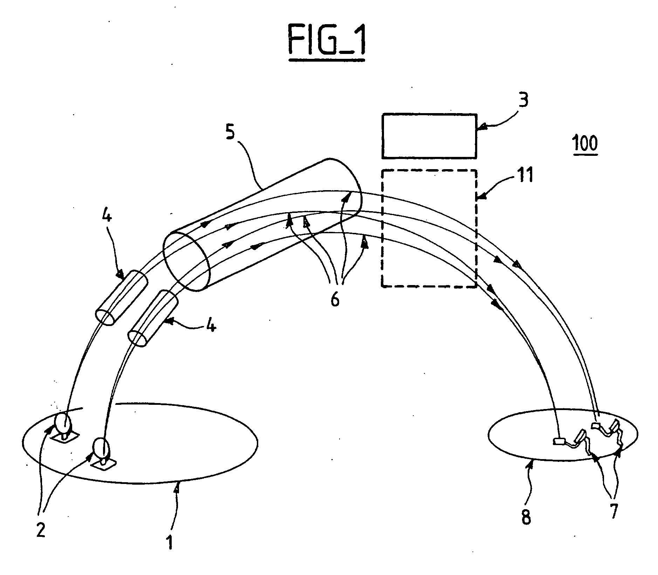

Comme montré en figure 1, un tel système de télécommunication 100 comporte une pluralité de terminaux utilisateurs 2, 7 qui sont des stations terrestres communicant entre elles via un satellite 3 avec un commutateur embarqué 11 à son bord. Le commutateur embarqué 11 reçoit alors sur ses ports d'entrée des flux montants de données, c'est à dire un ensemble de données qui montent des différentes stations terrestres 2 vers le satellite 3 et distribue, à partir de ses ports de sortie, des flux descendants de données, c'est à dire un ensemble de données qui descendent du satellite 3 vers d'autres stations terrestres 7. Les terminaux 2 qui émettent à destination d'un même port d'entrée du commutateur 11 sont regroupés en un même spot 1. De la même façon, les terminaux 7 qui reçoivent des données d'un même port de sortie du commutateur 11 sont regroupé en un spot 8. Le satellite 3 permet de router le trafic directement entre les spots 1 et 8 grâce au commutateur embarqué 11 ce qui permet de réduire au minimum l'utilisation de réseaux terrestres. Les différents terminaux utilisateurs 2 sont très souvent en concurrence pour utiliser les ressources qui consituent la bande passante des liaisons montantes et descendantes du satellite 3.

De manière connue, de nombreux dispositifs offrent une solution à la gestion dynamique des ressources d'un système satellitaire autorisant via le satellite une connectivité dynamique entre des spots.

Une solution consiste à utiliser un contrôleur de type DAMA (Demand Assignment Multiple Access) basé sur un protocole d'allocation dynamique des ressources qui alloue à des terminaux utilisateurs des fréquences et des intervalles temporels lorsque lesdits terminaux expriment le besoin d'émettre des données sous forme de paquets sur des liaisons montantes d'un terminal vers un satellite par le biais de requêtes envoyées au contrôleur DAMA. Un commutateur embarqué sur le satellite distribue alors les paquets de données qui arrivent sur une pluralité de liens montants vers une pluralité deliens descendants. Le commutateur embarqué peut être de deux types. Un premier type consiste en un commutateur de paquet. Celui-ci route chaque paquet ou salve de données individuellement en fonction d'informations de routage transmises avec le paquet lui-même ou dans un canal de contrôle séparé. Un second type consiste en un commutateur de circuit. Celui-ci route les signaux ou informations reçus en fonction de leur position en temps et en fréquence dans le lien montant. Un commutateur de circuit réalise un multiplexage déterministe. Il faut donc que la position en temps et en fréquence des signaux ou informations reçus dans chaque lien montant soient conformes à la configuration de routage du commutateur. Un commutateur de paquets réalise sur chacune de ses sorties un multiplexage statistique. Ainsi, il peut arriver que beaucoup de paquets aient pour destination la même sortie du commutateur : il en résultera un conflit. Ce conflit est résolu au moyen d'une mémoire tampon.

Cependant, cette mémoire tampon a une capacité limitée. Si cette capacité est dépassée, on observe alors un phénomène dit de congestion.

Une première solution à ce problème est d'augmenter la taille de la mémoire tampon mais cela nécessite alors des mémoires de capacité très importante, et donc pénalisantes en termes de masse et de consommation à bord d'un satellite.

Le document FR2811841 décrit une solution à ce problème.

Pour cela, il inclut un dispositif de contrôle de congestion qui reçoit des requêtes émises par des terminaux utilisateurs du satellite considéré, chaque requête exprimant un certain besoin d'utilisation de ressources du satellite; cette requête regroupe l'ensemble des besoins d'un terminal donné vers un spot de destination donné. Cet ensemble est appelé chemin virtuel. De tels chemins virtuels 4 sont représentés en figure 1 et constituent l'ensemble de flux de données d'un terminal donné 2 vers un même spot de destination 8. Le dispositif de contrôle de congestion va alors utiliser les requêtes qu'il reçoit pour déterminer les ressources autorisées pour chaque chemin virtuel, compte tenu des ressources possibles sur les sorties du commutateur. Ces ressources autorisées sont ensuite fournies à un contrôleur DAMA qui va allouer des ressources aux terminaux utilisateurs sur les liens montants du terminal vers le satellite. Ce dispositif de contrôle de congestion permet donc une approche préventive du phénomène de congestion.

Toutefois sa mise en oeuvre pose certaines difficultés. Ainsi, le fait de calculer des débits autorisés à chaque requête associée à un chemin virtuel entraîne un temps en traitement de calcul important.

De plus, l'interaction entre le dispositif de contrôle de congestion et le contrôleur DAMA est relativement complexe ; en effet, un échange de données s'effectue à chaque réception d'une requête d'un terminal.

En outre, lorsqu'une nouvelle requête correspondant à un chemin virtuel est reçue par le dispositif de contrôle de congestion, elle doit être pleinement satisfaite tant que la capacité de la sortie du commutateur le permet. Cette approche peut donner un privilège trop accru à la dernière requête; en effet, si le dispositif de contrôle de congestion autorise une quantité de ressources importantes à une requête d'un premier terminal, la requête suivante provenant d'un autre terminal ne pourra être satisfaite pleinement tant que le premier terminal n'aura pas envoyé une nouvelle requête. Ce phénomène peut entraîner une répartition non équitable des ressources autorisées.

La présente invention vise à fournir un dispositif gestionnaire de ressources pour un système de télécommunication par satellite permettant de limiter le temps de traitement de calcul et la complexité des échanges entre le contrôleur de congestion et le contrôleur DAMA et de s'affranchir du problème posé par la répartition inéquitable des ressources autorisées.

La présente invention propose à cet effet un dispositif gestionnaire de ressources pour un système de télécommunication par satellite, ledit système comportant une pluralité de terminaux utilisateurs émettant des données à destination d'une pluralité de spots par l'intermédiaire d'au moins un satellite, l'ensemble des flux d'un terminal donné vers un même spot de destination donné, dénommé chemin virtuel, se décomposant en un ensemble de flux montants dudit terminal vers le satellite et un ensemble de flux descendants du satellite vers ledit spot, ledit dispositif gestionnaire comportant une entité centrale associée à chaque satellite, ladite entité incluant des moyens pour recevoir des requêtes émises par lesdits terminaux utilisateurs, chaque requête exprimant le besoin d'utilisation de ressources du satellite correspondant au dit chemin virtuel **caractérisé en ce que** ladite entité comporte :

- des moyens pour regrouper lesdites requêtes en groupes de requêtes associées chacune à un ensemble de flux montant provenant d'un même spot, dit de provenance, vers ledit spot de destination, ledit ensemble étant dénommé lien virtuel, le spot de provenance comportant une pluralité de terminaux parmi ladite pluralité de terminaux utilisateurs du système,

- des moyens pour déterminer les ressources autorisées pour chacun desdits groupes de requêtes.

Grâce à l'invention, le regroupement des requêtes en groupe de requêtes permet de réduire le temps en traitement de calcul et la complexité des échanges de données entre le contrôleur de congestion et le contrôleur DAMA, les ressources autorisées étant envoyées au contrôleur DAMA pour chaque groupe de requêtes et non pour chaque requête.

En outre, ce regroupement permet un traitement plus équitable des requêtes puisque la détermination des ressources se fait pour cet ensemble de requêtes et non plus pour chaque requête individuelle.

De manière avantageuse, l'entité centrale comporte des moyens pour répartir sur ledit lien virtuel les ressources encore disponibles après la détermination desdites ressources autorisées et des moyens pour déterminer des ressources autorisées modifiées en fonction de ladite répartition des ressources encore disponibles pour chacun desdits liens virtuels. On peut ainsi traiter dans un premier temps la répartition des ressources dynamiques attribuées en fonction des requêtes des terminaux et, dans un second temps, la répartition des ressources disponibles après avoir pleinement réparti les ressources dynamiques.

De manière avantageuse, le dispositif selon l'invention comporte des moyens pour allouer les ressources dudit satellite aux terminaux utilisateurs associés à un même lien virtuel en fonction desdites ressources autorisées ou desdites ressources autorisées modifiées. Ces moyens constituent le contrôleur DAMA d'allocation dynamique des ressources qui alloue aux terminaux utilisateurs des fréquences ou des intervalles temporels pour qu'ils puissent émettre leurs données.

La présente invention propose également un procédé de gestion des ressources mis en oeuvre dans un dispositif selon l'invention caractérisé en ce qu' il comporte une première étape de répartition de la partie des ressources du satellite associées aux liaisons descendantes empruntées par les flux descendants vers un même spot entre les liens virtuels associés à ce même spot en fonction d'un paramètre de pondération associé à chaque lien virtuel de façon à générer des ressources autorisées associées à chaque lien virtuel.

De manière avantageuse, ce procédé comporte une deuxième étape de répartition de la partie des ressources du satellite associées aux liaisons montantes empruntées par les flux montants d'un même spot entre lesdites ressources autorisées associées à ce même spot en fonction d'un paramètre de pondération associé à chacune desdites ressources autorisées de façon à générer des ressources autorisées modifiées associées à chacune des ressources autorisées. La première étape de répartition du procédé peut en effet entraîner une attribution de ressources associées à une liaison descendante du satellite à un lien virtuel qui ne peut pleinement utiliser ces ressources car ce lien virtuel est saturé sur sa liaison montante: les autres liaisons montantes ne peuvent alors profiter des ressources qui ont été attribuées en trop au lien virtuel précédent. La deuxième étape de répartition permet de déterminer un nouveau jeu de ressources autorisées en prenant en compte les liaisons montantes afin d'éviter l'allocation de ressources qui ne pourraient être utilisées.

Selon un mode de réalisation, le procédé comporte une troisième étape de répartition des ressources du satellite encore disponibles après lesdites première et deuxième étapes de répartition ce qui conduit à des ressources autorisées modifiées en fonction de ladite répartition des ressources encore disponibles pour chacun desdits liens virtuels.

Avantageusement, au moins l'une desdites étapes de répartition est réitérée.

La présente invention a également pour objet un système de transmission de données comportant une pluralité de terminaux utilisateurs et au moins un satellite, ledit satellite comportant un commutateur de circuit dynamique et un contrôleur dudit commutateur, ledit système étant caractérisé en ce qu'il comporte un dispositif gestionnaire de ressources selon l'invention, ledit dispositif gestionnaire envoyant des ordres d'établissement de routage des données au dit contrôleur. Ainsi, outre le rôle préventif du dispositif gestionnaire de ressources, celui-ci peut envoyer des informations au contrôleur du commutateur qui va, en fonction de ces informations, informer le commutateur d'ordres d'établissement de routes.

D'autres caractéristiques et avantages de la présente invention apparaîtront dans la description suivante d'un mode de réalisation de l'invention, donné à titre illustratif et nullement limitatif.

Dans les figures suivantes :

- La figure 1 représente un système de transmission de données par satellite entre deux zones géographiques selon l'invention,
- La figure 2 représente un système de transmission de données utilisant un dispositif gestionnaire de ressources selon l'invention,
- La figure 3 représente l'architecture du dispositif gestionnaire de ressources selon l'invention,
- La figure 4 représente un système de transmission de données tel que décrit en figure 2 utilisant un commutateur de circuit dynamique selon l'invention.

Dans toutes les figures, les éléments communs portent les mêmes numéros de référence.

La figure 1 a déjà été partiellement décrite en relation avec l'état de la technique. La figure 1 représente également un ensemble de flux de données provenant d'un même spot 1 et descendant vers un même spot 8 appelé lien virtuel 5.

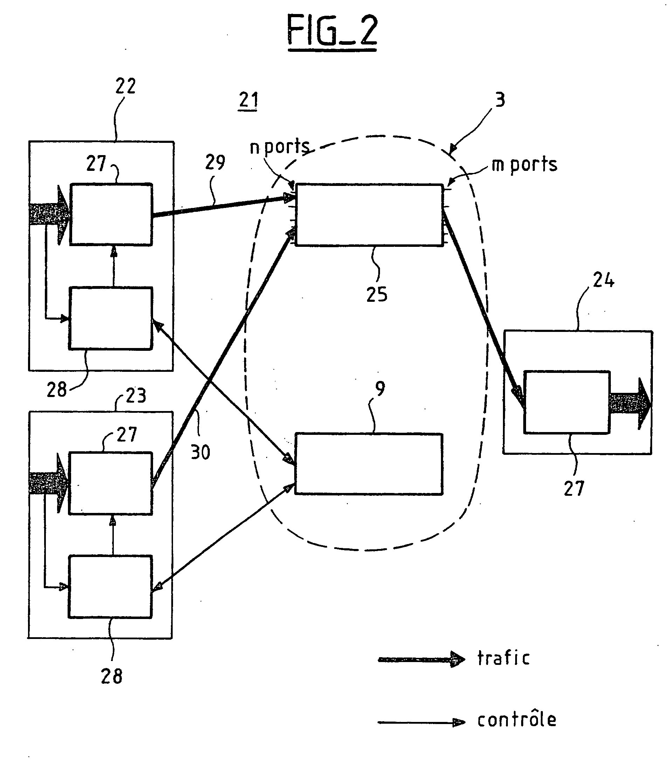

La figure 2 représente un système 21 de transmission de données comportant une pluralité de terminaux 22, 23 et 24 et un satellite 3. Le satellite 3 comporte un commutateur 25 et un dispositif gestionnaire de ressources 9 selon l'invention. Chaque terminal utilisateur 22, 23 comporte en outre des moyens 27 d'émission/réception de paquets de données et des moyens 28 d'émission de requêtes exprimant le besoin d'utilisation de ressources du satellite 3. Ces moyens 28 constituent également des moyens de réception des ressources allouées par le dispositif 9. Le satellite 3 est par exemple un satellite pour trafic multimédia (paquets IP, ATM, MPEG-2 ou autres) ayant une zone de service de type multi-spots. Le commutateur 25 comporte n ports d'entrées et m ports de sortie. Un spot est associé à chaque port.

Dans chaque terminal 22 et 23, les flux de données sont agrégés par chemin virtuel 29, 30 selon leurs spots de destination et leurs types. Chaque paquet de données émis sur le chemin virtuel 29, 30 est destiné à un terminal particulier 24. Pour chaque chemin virtuel, une requête est envoyée par les moyens 28 vers le dispositif 9. Après la gestion des différentes requêtes, le dispositif 9 envoie par le biais du contrôleur DAMA qu'il incorpore une autorisation d'émettre sous forme de ressources allouées reçues par les moyens 28.

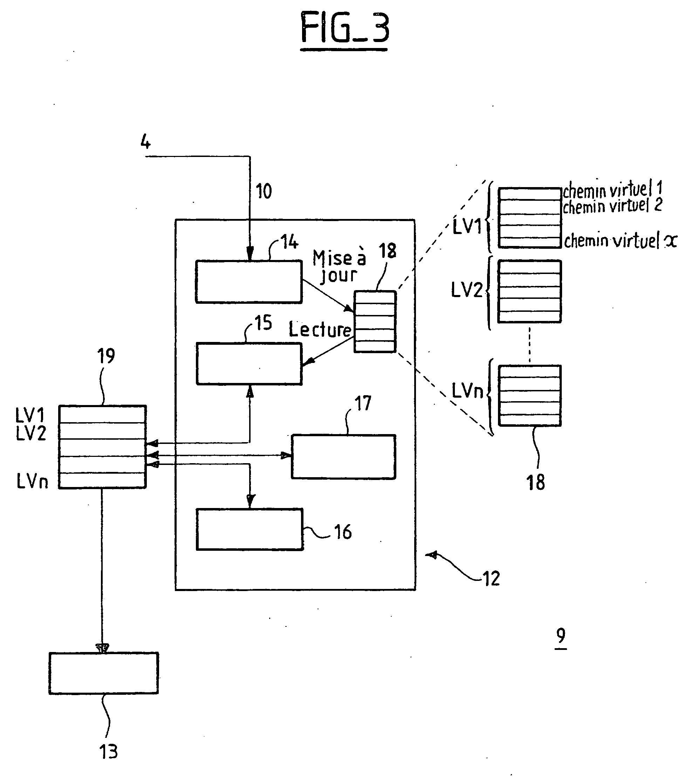

En figure 3, l'architecture du dispositif 9 gestionnaire de ressources selon l'invention est représentée fonctionnellement. Ce dispositif 9 peut être implémenté à bord du satellite ou au sol ou partiellement à bord et au sol. Ce dispositif 9 inclut une entité centrale 12. L'entité centrale comporte des moyens 14 pour recevoir des requêtes 10 émises à partir d'un chemin virtuel 4, des moyens 14 et 18 pour regrouper ces requêtes en groupes de requêtes, chacun de ces groupes étant associé à un lien virtuel et des moyens 15, 16 et 17 pour déterminer les ressources autorisées pour chacun des groupes de requêtes. Le procédé de détermination des ressources autorisées sera décrit par la suite. Le dispositif 9 comprend en outre des moyens 13 pour allouer les ressources du satellite aux terminaux utilisateurs associés à un même lien virtuel et une interface 19 entre l'entité centrale 12 et les moyens 13.

Chaque requête reçue est associée à un chemin virtuel 4. Quand la requête d'un chemin virtuel, notée R (chemin_virtuel) par la suite, est reçue par les moyens 14, ces dits moyens 14 mettent à jour le champ correspondant à ce chemin virtuel dans la table 18 qui maintient l'état courant des ressources requises par chemin virtuel et par lien virtuel, chaque lien virtuel i étant noté $LV_i$ pour i variant de 1 à n.

A chaque période dite « supertrame » c'est à dire une période de rafraîchissement à fixer qui peut varier entre 100ms et quelques secondes, les moyens 15, 16 et 17 vont être activés pour calculer les ressources autorisées pour chaque lien virtuel $LV_i$. Lesdits moyens 15, 16 et 17 vont pour cela utiliser des moyens logiciels, via une ou plusieurs itérations.

Les algorithmes ci dessous permettent ainsi la mise en oeuvre des moyens 15, 16 et 17.

Algorithme P1 utilisé pour la mise en oeuvre des moyens 15

P1 répartit les ressources d'une liaison descendante dénotée $D_k$ empruntée par les flux de données descendants vers un même spot entre les liens virtuels $LV_i$ associés à ce même spot. Pour cela, il calcule le facteur de charge $Z_k$ de $D_k$, c'est à dire le rapport de la capacité totale en ressources $C_k$ de la liaison descendante $D_k$ sur la somme des requêtes et attribue à chaque LV une portion équitable des ressources de cette liaison descendante :

1) Calcul de $S(LV_i)$ qui représente la somme des requêtes du lien virtuel $LV_i$
*Pour i= 1 à I* « I est le nombre de LV associés à $D_k$ »

$$S(LV_i) = \sum_{chemin\_virtuel \in LV_i} R(\text{chemin\_virtuel})$$

2) Calcul du facteur de charge $Z_k$

$$Z_k = C_k / \sum_i S(LV_i)$$

3) Calcul des ressources autorisées pour chaque lien virtuel $LV_i$ notées $RA(VLC_i)$
*Pour i = 1 à I*

$$RA(LV_i) = \min(1, Z_k) \times S(LV_i)$$

Algorithme P2 utilisé pour la mise en oeuvre des moyens 16

P2 répartit les ressources d'une liaison montante dénotée Mp empruntée par les flux de données montants d'un même spot entre les liens virtuels $LV_i$ associées à ce même spot. Pour cela, il calcule le facteur de charge $Z_p$ de $M_p$, c'est à dire le rapport de la capacité totale en ressources $C_p$ de la liaison montante $M_p$ sur la somme des ressources autorisées calculées précédemment et attribue à chaque LV une portion équitable des ressources de cette liaison montante

1) Calcul du facteur de charge $Z_p$

$$Z_p = C_p / \sum_i RA(LV_i)$$

2) Calcul des ressources autorisées modifiées $RA(LV_i)$
*Pour i = 1 à I* « I est le nombre de LV associés à $M_p$ »

$$RA(LV_i) = \min(1, Z_p) \times RA(LV_i)$$

Algorithme P3 utilisé pour la mise en oeuvre des moyens 15

P3 correspond à une deuxième itération de l'algorithme P1

1) Calcul du facteur de charge $Z_k$

$$Z_k = (C_k - \sum_v RA(LV_v)) / \sum_j S(LV_j)$$

« j parcourt tous les liens virtuels associés à $D_k$ qui ne sont pas contraints sur leur liaison montante c'est à dire pour lesquelles la liaison montante n'est pas pleinement occupée»

« v parcourt tous les liens virtuels associés à $D_k$ qui sont contraints sur leur lien montant c'est à dire pour lesquelles la liaison montante est pleinement occupée»

2) Calcul des ressources autorisées modifiées $RA(LV_j)$

*Pour j = 1 à J*

« J est le nombre de liens virtuels associés à $D_k$ qui ne sont pas contraints sur leur liaison montante »

$$RA(LV_j) = \min(1, Z_k) \times S(LV_j)$$

Les autres ressources autorisées, c'est à dire celles associées à des liens virtuels associés à $D_k$ qui sont contraints sur leur liaison montante, restent inchangées par rapport au calcul fait lors de l'algorithme P2.

Les ressources autorisées RA sont alors mises à jour dans la table 19 qui constitue l'interface entre l'entité 12 et les moyens 13 d'allocation de ressources.

De la même façon, l'algorithme P2 peut être itéré plusieurs fois. Une nouvelle itération va permettre de calculer des ressources autorisées qui seront modifiées uniquement pour des liens montants congestionnés c'est à dire pour lesquels le facteur de charge $Z_p$ est strictement inférieur à 1.

Algorithme P4 utilisé pour la mise en oeuvre des moyens 17

P4 va répartir entre les liens virtuels les ressources encore disponibles sur les liaisons montantes et descendantes non contraintes après les répartitions effectuées par P1, P2 et P3.

Pour toutes les liaisons descendantes $D_k$ pour lesquels $Z_k \geq 1$

1) Calcul du facteur de sous-charge $X_k$ :

$$X_k = (C_k - \sum_i RA(LV_i)) / \sum_j RA(LV_j)$$

« i parcourt tous les liens virtuels associés à $D_k$ »

« j parcourt seulement les liens virtuels associés à $D_k$ qui ne sont pas contraints sur leur liaison montante »

2) Calcul des ressources autorisées provenant de la capacité disponible notées $CDA(LV_j)$ :

*Si $X_k > 0$,*

*Pour j = 1 à J*

« J est le nombre de liens virtuels LV associées à $D_k$ qui ne sont pas contraints sur leur liaison montante »

$$CDA(LV_j) = X_k \times RA(LV_j)$$

pour toutes les liaisons montantes j pour lesquels $Z_p \geq 1$

3) Calcul du facteur de sous-charge $X_p$ :

$$X_p = (C_p - \sum_k RA(LV_k))/\sum_k CDA(LV_k)$$

.

4) Calcul des nouvelles ressources CDA(LV$_i$) :
*Si X$_p$<1,*
*Pour k=1 à K « K est le nombre de LV associés à M$_p$ »*

$$CDA(LV_k) = X_u \times CDA(LV_k)$$

Si X$_p$ est strictement inférieur à 1, les ressources CDA correspondantes sont ajoutées aux ressources autorisées RA(LV) dans la table 19. Les liens LV correspondants sont désormais considérés comme contraints sur leur liaison montante.

Le calcul des CDA sur les liaisons descendantes est alors répété de manière itérative jusqu'à ce que toutes les liaisons montantes restantes (non contraintes) soient telles que X$_p$ soit supérieur ou égal à 1.

Les moyens 13 constituent un contrôleur de type DAMA connu en soi qui va utiliser les données se trouvant dans la table 19 pour allouer des ressources effectives correspondant aux requêtes qu'il reçoit des terminaux utilisateurs.

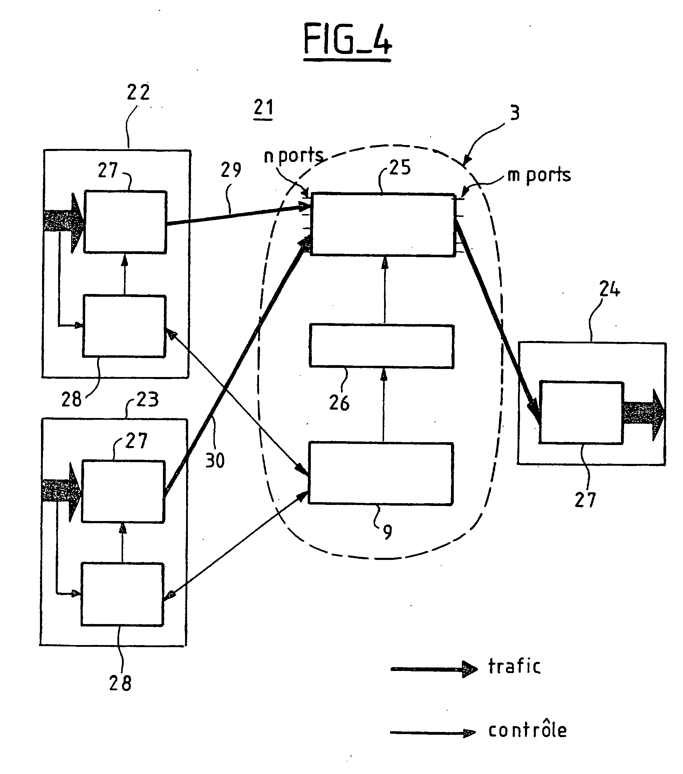

La figure 4 représente un système 21 de transmission de données tel que décrit en figure 2 utilisant un commutateur 25 de circuit dynamique. Le satellite 3 comporte un contrôleur 26 dudit commutateur 25 et un dispositif gestionnaire de ressources 9 selon l'invention tel que décrit en rapport avec la figure 3.

L'ensemble comprenant le commutateur de circuit dynamique 25 et son contrôleur 26 est un organe de routage à bord du satellite 3 : cet organe établit de façon dynamique des routes entre les n ports d'entrées du commutateur 25 et les m ports de sortie de ce même commutateur 25.

Lorsque le dispositif 9 envoie vers les moyens 28 par le biais du contrôleur DAMA une autorisation d'émettre sous forme de ressources allouées, le dispositif 9 envoie en parallèle un ordre d'établissement de route au contrôleur 26. Ainsi, chaque terminal 22, 23 va émettre sur chaque chemin virtuel 29, 30 à l'instant indiqué dans ses ressources allouées et le commutateur 25 aura préalablement établi la route demandée à ce même instant que lui aura communiquée le dispositif 9.

Fonctionnellement, le système 21 est assimilable à un système de commutation de paquets dont les ports d'entrées sont les accès des terminaux émetteurs et les ports de sortie les accès des terminaux récepteurs. Un commutateur du type SS-TDMA (satellite switched- time division multiple access ou accès multiple par répartition dans le temps commuté par satellite) est parfaitement adapté à ce type de réalisation.

Bien entendu, l'invention n'est pas limitée au mode de réalisation qui vient d'être décrit.

Notamment, le commutateur SS-TDMA peut être remplacé par tous types de commutateurs de circuit, transparent ou régénératif, ayant des performances de commutation compatibles avec une utilisation en salve, c'est à dire qu'il peut être reconfiguré (ordres d'établissement de routes) toutes les supertrames (de 100 ms à quelques secondes) et même salve par salve.

Enfin, on pourra remplacer tout moyen par un moyen équivalent sans sortir du cadre de l'invention.

## Revendications

**1.** Dispositif (9) gestionnaire de ressources pour un système de télécommunication par satellite, ledit système comportant une pluralité de terminaux utilisateurs (2, 7) émettant des données à destination d'une pluralité de spots (8) par l'intermédiaire d'au moins un satellite (3), l'ensemble des flux d'un terminal donné (2) vers un même spot (8) de destination donné, dénommé chemin virtuel (4), se décomposant en un ensemble de flux montants dudit terminal (2) vers le satellite (3) et un ensemble de flux descendants du satellite (3) vers ledit spot (8), ledit dispositif (9) gestionnaire comportant une entité centrale (12) associée à chaque satellite (3), ladite entité (12) incluant des moyens (14) pour recevoir des requêtes émises par lesdits terminaux (2) utilisateurs, chaque requête exprimant le besoin d'utilisation de ressources du satellite correspondant au dit chemin virtuel (4) **caractérisé en ce que** ladite entité (12) comporte :

- des moyens (14, 18) pour regrouper lesdites requêtes en groupes de requêtes associées chacune à un ensemble de flux montant provenant d'un même spot, dit de provenance, vers ledit spot de destination, ledit ensemble étant dénommé lien virtuel (5), le spot de provenance comportant une pluralité de terminaux (2) parmi ladite pluralité de terminaux utilisateurs (2, 7) du système,
- des moyens (15, 16, 17) pour déterminer les ressources autorisées pour chacun desdits groupes de requêtes.

2. Dispositif (9) selon la revendication précédente **caractérisé en ce que** l'entité centrale comporte des moyens (17) pour répartir sur ledit lien virtuel (5) les ressources encore disponibles après la détermination desdites ressources autorisées et des moyens (17) pour déterminer des nouvelles ressources autorisées modifiées en fonction de ladite répartition des ressources encore disponibles pour chacun desdits liens virtuels (5).

3. Dispositif (9) selon l'une des revendications précédentes **caractérisé en ce qu'**il comporte des moyens (13) pour allouer les ressources dudit satellite aux terminaux utilisateurs (2) associés à un même lien virtuel (5) en fonction desdites ressources autorisées ou desdites ressources autorisées modifiées.

4. Procédé de gestion des ressources mis en oeuvre dans un dispositif (9) gestionnaire de ressources pour un système de télécommunication par satellite, ledit système comportant une pluralité de terminaux utilisateurs (2, 7) émettant des données à destination d'une pluralité de spots (8) par l'intermédiaire d'au moins un satellite (3), l'ensemble des flux d'un terminal donné (2) vers un même spot (8) de destination donné, dénommé chemin virtuel (4), se décomposant en un ensemble de flux montants dudit terminal (2) vers le satellite (3) et un ensemble de flux descendants du satellite (3) vers ledit spot (8), ledit procédé de gestion comportant une étape de réception, par une entité centrale (12) du dispositif gestionnaire associée à chaque satellite (3), de requêtes émises par lesdits terminaux (2) utilisateurs, chaque requête exprimant le besoin d'utilisation de ressources du satellite correspondant au dit chemin virtuel (4), **caractérisé en ce que** ledit procédé de gestion comporte :

- une étape de regroupage, dans l'entité centrale (12), desdites requêtes en groupes de requêtes associées chacune à un ensemble de flux montant provenant d'un même spot, dit de provenance, vers ledit spot de destination, ledit ensemble étant dénommé lien virtuel (5), le spot de provenance comportant une pluralité de terminaux (2) parmi ladite pluralité de terminaux utilisateurs (2, 7) du système,
- une étape de détermination des ressources autorisées pour chacun desdits groupes de requêtes.

5. Procédé selon la revendication 4, **caractérisé en ce qu'**il comporte une première étape de répartition de la partie des ressources du satellite associées aux liaisons descendantes empruntées par les flux descendants vers un même spot (8) entre les liens virtuels (5) associés à ce même spot (8) en fonction d'un paramètre de pondération associé à chaque lien virtuel (5) de façon à générer des ressources autorisées associées à chaque lien virtuel (5).

6. Procédé selon la revendication 5 **caractérisé en ce qu'**il comporte une deuxième étape de répartition de la partie des ressources du satellite associées aux liaisons montantes empruntées par les flux montants d'un même spot (1) entre lesdites ressources autorisées associées à ce même spot (1) en fonction d'un paramètre de pondération associé à chacune desdites ressources autorisées de façon à générer des ressources autorisées modifiées associées à chacune desdites ressources autorisées.

7. Procédé selon la revendication 6 **caractérisé en ce qu'**il comporte une troisième étape de répartition des ressources du satellite encore disponibles après lesdites première et deuxième étapes de répartition ce qui conduit à des ressources autorisées modifiées en fonction de ladite répartition des ressources encore disponibles pour chacun desdits liens virtuels.

8. Procédé selon l'une des revendications 6 à 7 **caractérisé en ce qu'**au moins l'une desdites étapes de répartition est réitérée.

9. Système (21) de transmission de données comportant une pluralité de terminaux (22, 23, 24) utilisateurs et au moins un satellite (3), ledit satellite (3) comportant un commutateur (25) de circuit dynamique et un contrôleur (26) dudit commutateur (25), ledit système (21) étant **caractérisé en ce qu'**il comporte un dispositif (9) gestionnaire de ressources selon l'une des revendications 1 à 3, ledit dispositif (9) gestionnaire envoyant des ordres d'établissement de routage des données au dit contrôleur (26).

**Claims**

1. Resource manager (9) for a satellite telecommunication system including a plurality of user terminals (2, 7) sending data to a plurality of spots (8) via at least one satellite (3), all data streams from a given terminal (2) to the same given destination spot (8) being known as a virtual path (4) comprising a set of uplinks from said terminal (2) to the satellite (3) and a set of downlinks from the satellite (3) to said spot (8), said manager (9) including a central entity (12) associated with each satellite (3), said entity (12) including means (14) for receiving requests sent by said user terminals (2) and each request expressing a requirement to use resources of the satellite corresponding to said virtual path (4), which resource manager is **characterised in that** said entity (12) includes:

- means (14, 18) for grouping said requests into request groups each associated with a set of uplinks from the same spot, known as the source spot, to said destination spot, said set being known as a virtual link (5), and the source spot including a plurality of terminals (2) among said plurality of user terminals (2, 7) of the system, and
- means (15, 16, 17) for determining authorised resources for each of said request groups.

2. Resource manager (9) according to the preceding claim, **characterised in that** the central entity includes means (17) for distributing on said virtual link (5) resources that remain available after determination of said authorised resources and means (17) for determining new authorised resources modified as a function of said distribution of resources still available for each of said virtual links (5).

3. Resource manager (9) according to either of the preceding claims, **characterised in that** it includes means (13) for assigning resources of said satellite to user terminals (2) associated with the same virtual link (5) as a function of said authorised resources or said modified authorised resources.

4. Method of managing resources used in a resource manager (9) for a satellite telecommunication system including a plurality of user terminals (2, 7) sending data to a plurality of spots (8) via at least one satellite (3), all data streams from a given terminal (2) to the same given destination spot (8) being known as a virtual path (4) comprising a set of uplinks from said terminal (2) to the satellite (3) and a set of downlinks from the satellite (3) to said spot (8), said management method including a step of a central entity (12) of the management device associated with each satellite (3) receiving requests sent by said user terminals (2), each request expressing a requirement to use resources of the satellite corresponding to said virtual path (4), **characterised in that** said management method includes:

- a step of grouping said requests, in the central entity (12), into request groups each associated with a set of uplinks from the same spot, known as the source spot, to said destination spot, said set being known as a virtual link (5), and the source spot including a plurality of terminals (2) among said plurality of user terminals (2, 7) of the system, and
- a step of determining authorised resources for each of said request groups.

5. Method according to claim 4, **characterised in that** it includes a first step of distributing a portion of the resources of the satellite associated with the downlinks used by the downlink streams to the same spot (8) between the virtual links (5) associated with said same spot (8) as a function of a weighting parameter associated with each virtual link (5) in order to generate authorised resources associated with each virtual link (5).

6. Method according to claim 5, **characterised in that** it includes a second step of distributing the portion of the resources of the satellite associated with the uplinks used by the uplink streams from the same spot (1) between said authorised resources associated with said same spot (1) as a function of a weighting parameter associated with each of said authorised resources so as to generate modified authorised resources associated with each of said authorised resources.

7. Method according to claim 6, **characterised in that** it includes a third step of distributing the resources of the satellite still available after said first and second distribution steps to constitute authorised resources modified as a function of said distribution of resources still available for each of said virtual links.

8. Method according to either of claims 6 and 7, **characterised in that** at least one of said distribution steps is repeated.

9. Data transmission system (21) including a plurality of user terminals (22, 23, 24) and at least one satellite (3) including a dynamic circuit switch (25) and a controller (26) for said switch (25), said system being **characterised in that** it includes a resource manager (9) according to any of claims 1 to 3, said manager (9) sending data routing set-up instructions to said controller (26).

**Patentansprüche**

1. Vorrichtung (9) zur Ressourcenverwaltung in einem Satelliten-Telekommunikationssystem, wobei das genannte System eine Vielzahl von Nutzer-Terminals (2, 7) umfasst, die Daten über mindestens einen Satelliten (3) an eine Vielzahl von Punkten (8) senden, wobei sich die Einheit der Datenströme von einem gegebenen Terminal (2) an einen gegebenen Zielpunkt (8), der so genannte virtuelle Pfad (4), in eine Einheit aus aufsteigenden Datenströmen von dem genannten Terminal (2) an den Satelliten (3) und eine Einheit aus absteigenden Datenströmen vom Satelliten (3) an den genannten Punkt (8) untergliedert, wobei die genannte Verwaltungsvorrichtung eine Zentraleinheit (12) umfasst, die jedem Satelliten (3) zugeordnet ist, wobei die genannte Einheit (12) Mittel (14) zum Empfang von Anfragen umfasst, die von den genannten Nutzer-Terminals (2) abgesetzt werden, wobei jede Anfrage den Bedarf zur Nutzung der Ressourcen des Satelliten entsprechend dem genannten virtuellen Pfad (4) ausdrückt, **dadurch gekennzeichnet, dass** die genannte Einheit (12) Folgendes umfasst:

   - Mittel (14, 18) zur Zusammenfassung der genannten Anfragen in Anfragegruppen, die jeweils einer Einheit aus aufsteigenden Datenströmen, die vom gleichen Punkt, dem so genannten Ursprung, stammen, an den genannten Zielpunkt zugeordnet sind, wobei die genannte Einheit als virtuelle Verbindung (5) bezeichnet wird, wobei der Ursprungspunkt eine Vielzahl von Terminals (2) aus der genannten Vielzahl von Nutzer-Terminals (2, 7) des Systems umfasst,
   - Mittel (15, 16, 17) zur Festlegung der freigegebenen Ressourcen für jede der genannten Anfragegruppen.

2. Vorrichtung (9) gemäß dem vorgenannten Anspruch, **dadurch gekennzeichnet, dass** die Zentraleinheit Mittel (17) zur Aufteilung der nach der Festlegung der genannten freigegebenen Ressourcen noch verfügbaren Ressourcen auf die virtuelle Verbindung (5) sowie Mittel (17) zur Festlegung von neuen, in Abhängigkeit von der genannten Aufteilung der noch verfügbaren Ressourcen geänderten, freigegebenen Ressourcen für jede der genannten virtuellen Verbindungen (5) umfasst.

3. Vorrichtung (9) gemäß einem der vorgenannten Ansprüche, **dadurch gekennzeichnet, dass** sie Mittel (13) zur Zuteilung von Ressourcen des genannten Satelliten an die Nutzer-Terminals (2) umfasst, die in Abhängigkeit von den genannten freigegebenen Ressourcen oder den genannten geänderten, freigegebenen Ressourcen der gleichen virtuellen Verbindung (5) zugeordnet werden.

4. Verfahren zur Ressourcenverwaltung, das in einer Vorrichtung (9) zur Ressourcenverwaltung für ein Satelliten-Telekommunikationssystem umgesetzt wird, wobei das genannte System eine Vielzahl von Nutzer-Terminals (2, 7) umfasst, die Daten über mindestens einen Satelliten (3) an eine Vielzahl von Punkten (8) senden, wobei die Einheit der Datenströme von einem gegebenen Terminal (2) an einen gegebenen Zielpunkt (8), der so genannte virtuelle Pfad (4), in eine Einheit aus aufsteigenden Datenflüssen von dem genannten Terminal (2) an den Satelliten (3) und in eine Einheit aus absteigenden Datenflüssen vom Satelliten (3) an den genannten Punkt (8) untergliedert ist, wobei das genannte Verwaltungsverfahren einen Schritt zum Empfang der von den genannten Nutzer-Terminals (2) abgesetzten Anfragen in der Zentraleinheit (12) der jedem Satelliten (3) zugeordneten Verwaltungseinheit umfasst, wobei jede Anfrage den Bedarf zur Nutzung der Satelliten-Ressourcen ausdrückt, die dem genannten virtuellen Pfad (4) entsprechen, **dadurch gekennzeichnet, dass** das genannte Verwaltungsverfahren Folgendes umfasst:

   - einen Schritt zur Zusammenfassung der genannten Anfragen in der Zentraleinheit (12) zu Anfragegruppen, die jeweils einer Einheit von aufsteigenden Datenflüssen, die vom gleichen Punkt stammen, dem so genannten Ursprung, zum genannten Zielpunkt entsprechen, wobei die genannte Einheit als virtuelle Verbindung (5) bezeichnet wird, wobei der Ursprungspunkt eine Vielzahl von Terminals (2) aus der genannten Vielzahl von Nutzer-Terminals (2, 7) des Systems umfasst,
   - einen Schritt zur Festlegung der freigegebenen Ressourcen für jede der genannten Anfragegruppen.

5. Verfahren gemäß Anspruch 4, **dadurch gekennzeichnet, dass** es einen ersten Schritt zur Zuteilung des Anteils an Satelliten-Ressourcen umfasst, die den absteigenden Verbindungen zugeordnet sind, die von den absteigenden Datenströmen an einen bestimmten Punkt (8) unter den virtuellen Verbindungen (5), die diesem Punkt (8) zugeordnet sind, in Abhängigkeit von einem Gewichtungsparameter genutzt werden, der jeder virtuellen Verbindung (5) zugeordnet ist, um freigegebene Ressourcen zu erzeugen, die jeder virtuellen Verbindung (5) zugeordnet sind.

6. Verfahren gemäß Anspruch 5, **dadurch gekennzeichnet, dass** es einen zweiten Schritt zur Zuteilung des Anteils an Satelliten-Ressourcen umfasst, die den aufsteigenden Verbindungen zugeordnet sind, die von den aufsteigenden Datenströmen von einem bestimmten Punkt (1) unter den genannten freigegebenen Ressourcen, die diesem Punkt (1) zugeordnet sind, in Abhängigkeit von einem Gewichtungsparameter genutzt werden, der jeder der genannten freigegebenen Ressourcen zugeordnet ist, um geänderte freigegebene Ressourcen zu erzeugen, die jeder der genannten freigegebenen Ressourcen zugeordnet sind.

**7.** Verfahren gemäß Anspruch 6, **dadurch gekennzeichnet, dass** es einen dritten Schritt zur Zuteilung der Satelliten-Ressourcen umfasst, die nach dem genannten ersten und zweiten Zuteilungsschritt noch verfügbar sind, was zu freigegebenen Ressourcen führt, die in Abhängigkeit von der genannten Zuteilung der noch verfügbaren Ressourcen für jede der genannten virtuellen Verbindungen geändert werden.

**8.** Verfahren gemäß einem der Ansprüche 6 und 7, **dadurch gekennzeichnet, dass** mindestens einer der genannten Zuteilungsschritte wiederholt wird.

**9.** Datenübertragungssystem (21), bestehend aus einer Vielzahl von Nutzer-Terminals (22, 23, 24) und mindestens einem Satelliten (3), wobei der genannte Satellit (3) eine Vorrichtung zur dynamischen Leitvermittlung (25) und einen Controller (26) für die genannte Vorrichtung (25) umfasst, wobei das genannte System (21) **dadurch gekennzeichnet ist, dass** es eine Vorrichtung (9) zur Ressourcenverwaltung gemäß einem der Ansprüche 1 bis 3 umfasst, wobei die genannte Verwaltungsvorrichtung (9) Befehle zur Erstellung von Datenleitwegen an den genannten Controller (26) sendet.

# FIG_1

# FIG_2

22

27

28

23

27

28

21

29

n ports

30

25

9

3

m ports

24

27

⟹ trafic

⟶ contrôle

# FIG_3

# FIG_4

trafic

contrôle